# EUROPÄISCHE PATENTSCHRIFT

(11) **EP 3 663 644 B1**
(45) Veröffentlichungstag und Bekanntmachung des Hinweises auf die Patenterteilung: **16.12.2020**
(21) Anmeldenummer: 19208792.2
(22) Anmeldetag: 13.11.2019
(51) Int. Cl.: F21V 21/34, F21V 23/06, H01R 25/16, A01G 15/00, F21V 31/00, F21V 29/76, F21V 19/00, F21S 8/04, F21S 2/00, F21Y 115/10, H01R 13/24

(54) **LEUCHTE**
LUMINAIRE
LUMINAIRE

(30) Priorität: 04.12.2018 AT 19718 U
(43) Veröffentlichungstag der Anmeldung: 10.06.2020
(73) Patentinhaber: SANLight GmbH, 6700 Bludenz (AT)
(72) Erfinder: Anker, Martin, 6771 St. Anton im Montafon (AT)
(74) Vertreter: Hofmann, Ralf U.

(56) Entgegenhaltungen:
- EP-A1- 2 942 559
- WO-A2-2011/081337
- DE-U1-202014 100 951

## Beschreibung

Die vorliegende Erfindung betrifft eine Leuchte zur Beleuchtung von Pflanzen, wobei die Leuchte eine Tragschiene mit einer in oder an der Tragschiene angeordneten Stromzuführung und an der Tragschiene angeordnete LED-Einheiten aufweist, welche von der Stromzuführung mit elektrischer Energie gespeist sind.

Leuchten der eingangs genannten Art werden, insbesondere in Gewächshäusern, zur künstlichen Beleuchtung von Pflanzen eingesetzt. Die Anforderungen an derartige Leuchten sind speziell, da in Gewächshäusern in der Regel eine hohe Luftfeuchtigkeit herrscht, die die Lebensdauer elektrischer und/oder elektronischer Bauteile der Leuchte herabsetzen kann. In Gewächshäusern werden zudem oft chemische Mittel, wie z.B. Schwefel und/oder Schwefelverbindungen, eingesetzt, die die Entstehung von Pilzen und Pflanzenkrankheiten verhindern oder Pflanzenschädlinge abtöten sollen. Diese Mittel sind jedoch häufig schädlich für die elektrischen und/oder elektronischen Bauteile der Leuchte. Z.B. wurde festgestellt, dass Schwefel bzw. Schwefelverbindungen für die LEDs der LED-Einheiten bzw. deren Kontaktstellen schädlich sind und die Lebensdauer der LED-Einheiten bzw. der Leuchten an sich drastisch reduzieren kann.

Die Leuchten der eingangs genannten Art sind üblicherweise hinsichtlich der Lichtcharakteristik vorkonfiguriert und weisen eine vorbestimmte Anzahl von LED-Einheiten auf, die an der Tragschiene fix befestigt sind. Ein Austausch beschädigter LED-Einheiten ist meist unrentabel oder aufgrund einer integralen Bauweise mit der Lagerschiene nicht vorgesehen, sodass häufig die komplette Leuchte ersetzt werden muss. Gattungsgemäße Leuchten sind aus der EP 2942559 A1, der DE 20 2014 100 951 U1 und der WO 2011/081337 A2 bekannt.

Aufgabe der Erfindung ist es, eine vorteilhafte Leuchte der eingangs genannten Art bereitzustellen, bei der eine lange Lebensdauer der LED-Einheiten gewährleistet ist und die flexibel an unterschiedliche Anforderungen angepasst werden kann.

Erfindungsgemäß gelingt dies mit einer Leuchte nach Anspruch 1.

Bei der Leuchte gemäß der Erfindung ist vorgesehen, dass diese mit der Tragschiene verbindbare und wieder zerstörungsfrei von der Tragschiene lösbare Beleuchtungsmodule aufweist, auf denen jeweils zumindest eine der LED-Einheiten angeordnet ist. Die Stromzuführung weist Kontakte auf und am jeweiligen Beleuchtungsmodul sind, mit den Kontakten elektrisch leitend verbindbare, Gegenkontakte angeordnet, wobei sich die Kontakte und Gegenkontakte in einer Betriebsstellung, in der ein jeweiliges Beleuchtungsmodul mit der Tragschiene verbunden ist, berühren. Die Tragschiene umfasst ein Hohlprofil mit zumindest einer sich in Längsrichtung des Hohlprofils erstreckenden Hohlkammer, in der die Stromzuführung angeordnet ist, wobei eine die Hohlkammer begrenzende Außenwand des Hohlprofils Öffnungen aufweist, durch die hindurch die Gegenkontakte des jeweiligen Beleuchtungsmoduls mit den Kontakten elektrisch leitend verbindbar sind. Die Leuchte weist im Weiteren, die jeweilige Öffnung umgebende, elastomere Dichtungen auf, die in der Betriebsstellung zur gegenseitigen Abdichtung zwischen dem jeweiligen Beleuchtungsmodul und der Tragschiene angeordnet sind.

Die Beleuchtungsmodule der erfindungsgemäßen Leuchte sind somit von der Tragschiene zerstörungsfrei abnehmbar und an diese wieder anbringbar. Dadurch ist es möglich einzelne Beleuchtungsmodule im Bedarfsfall von der Tragschiene abzunehmen und/oder auszutauschen. Die Beleuchtungsmodule können gegebenenfalls repariert und nach der Reparatur wiederum an der Tragschiene angeordnet werden. Je nach Bedarf können die Beleuchtungsmodule flexibel gegen andere Beleuchtungsmodule, welche z.B. eine andere Lichtleistung oder eine andere Lichtcharakteristik aufweisen, ausgetauscht werden.

Durch das Vorsehen von Kontakten bzw. Gegenkontakten, die sich in der Betriebsstellung berühren und zur Abnahme des jeweiligen Beleuchtungsmoduls zerstörungsfrei voneinander lösbar sind, wird eine elektrische Schnittstelle zwischen der Tragschiene und den daran angeordneten Beleuchtungsmodulen geschaffen. Die Kontakte oder Gegenkontakte könnten beispielsweise von einer Steckverbindung bereitgestellt werden, über welche das jeweilige Beleuchtungsmodul mit der Stromzuführung elektrisch verbindbar ist. Auch andere Arten von Kontakten und Gegenkontakten sind denkbar und möglich, wobei auf besonders bevorzugte Ausführungsformen im Folgenden noch eingegangen wird.

Die die jeweilige Öffnung umgebende elastomere Dichtung verhindert ein Eintreten von Feuchtigkeit und schädlichen Mitteln, wie z.B. Schwefel oder Schwefelverbindungen, welche die Kontakte oder elektrische oder elektronische Bauteile in der Leuchte schädigen könnten. Die Dichtungen erhöhen somit die Lebensdauer der Leuchte und ermöglichen den Einsatz zur Beleuchtung von Pflanzen in einer in Gewächshäusern typischerweise vorhandenen Atmosphäre bzw. Umgebungsluft.

Die Dichtungen können an der Tragschiene oder jeweils eine der Dichtungen am Beleuchtungsmodul befestigt sein. Am jeweils anderen dieser Teile ist dann ein Dichtsitz angeordnet, an dem die Dichtung in der Betriebsstellung anliegt. Die Dichtung kann beispielsweise mittels Klebstoff an der Tragschiene oder am jeweiligen Beleuchtungsmodul befestigt sein.

Die elastomeren Dichtung besteht günstigerweise aus einem natürlichen Elastomer, z.B. Gummi, oder aus einem synthetischen Elastomer, z.B. Polyurethan. Auch Mischungen unterschiedlicher Elastomere sind denkbar und möglich.

Beim Hohlprofil kann es sich beispielsweise um ein Strangpressprofil aus Metall, insbesondere aus Aluminium oder einer Aluminiumlegierung, handeln. Das Hohlprofil kann ein- oder mehrteilig aufgebaut sein. Bevorzugterweise umfasst die Tragschiene Abdeckungen, die einander gegenüberliegende Stirnseiten des Hohlprofils verschließen. Zwischen der jeweiligen Abdeckung und der Tragschiene kann eine Dichtung angeordnet sein, um den Eintritt schädlicher Substanzen in die zumindest eine Hohlkammer des Hohlprofils über die Stirnseiten zu verhindern.

Bei der LED-Einheit handelt es sich um eine Anordnung, die Leuchtdioden, d.h. LEDs, und Linsen umfasst, wobei die LEDs bei einer Bestromung Licht emittieren, das über die Linsen aus der LED-Einheit austritt, um die Pflanzen zu beleuchten. Die LEDs könnten in Serie oder Parallel verschaltet sein. Derartige LED-Einheiten sind hinlänglich bekannt.

Vorzugsweise sind die Beleuchtungsmodule über Schnappverbindungen mit der Tragschiene verbindbar bzw. verbunden. Durch die Schnappverbindung sind die Beleuchtungsmodule in der Betriebsstellung formschlüssig an der Tragschiene gehalten.

In einer bevorzugten Ausführungsform weist das jeweilige Beleuchtungsmodul von einem Basissteg abstehende Rastarme auf, die in der Betriebsstellung beidseitig an die Tragschiene angrenzen und in an der Tragschiene angeordnete Gegenrastelemente einschnappen. Die Gegenrastelemente sind vorzugsweise an Außenseiten von Seitenwänden der Tragschiene angeformt. Der jeweilige Rastarm ist günstigerweise elastisch verformbar und weist zumindest eine Rastnase auf, die in der Betriebsstellung in das Gegenrastelement, das z.B. eine Hinterschneidung oder eine Vertiefung aufweist, einschnappt.

Die elastomere Dichtung ist in der Betriebsstellung zweckmäßigerweise elastisch verformt, d.h. komprimiert, und ruft eine Vorspannkraft zwischen dem jeweiligen Beleuchtungsmodul und der Tragschiene hervor. Dadurch wird eine sichere und dichte Verbindung zwischen dem Beleuchtungsmodul und der Tragschiene gewährleistet und auch eine spielfreie mechanische Verbindung kann erreicht werden.

Die die Öffnungen aufweisende Außenwand bildet günstigerweise die Bodenseite des Hohlprofils, wobei die Dichtung in der Betriebsstellung zwischen der die Öffnungen aufweisenden Außenwand und dem Basissteg des jeweiligen Beleuchtungsmoduls angeordnet ist.

In einer bevorzugten Ausführungsform überragen die Basisstege die Tragschiene in der Betriebsstellung, insbesondere beidseitig. Hierbei kragen die Basisstege, in einer Richtung parallel zur Längsrichtung der Tragschiene gesehen, seitlich von der Tragschiene aus.

Bevorzugterweise weist das Beleuchtungsmodul vom Basissteg abstehende Kühlrippen auf. Die Kühlrippen dienen zur Abfuhr von Wärme, die in den LED-Einheiten beim Emittieren von Licht entsteht.

Günstigerweise ist vorgesehen, dass die Rastarme von den in der Betriebsstellung beidseitig an die Tragschiene angrenzenden Kühlrippen gebildet sind. D.h., die in der Betriebsstellung an die Tragschiene angrenzenden Kühlrippen dienen einerseits zur Abfuhr von Wärme und andererseits zur Verbindung mit der Tragschiene. Bevorzugterweise stehen zumindest die an die Tragschiene angrenzenden Kühlrippen orthogonal vom Basissteg ab.

In einer bevorzugten Ausführungsform ist vorgesehen, dass die Gegenkontakte von federnd gelagerten Kontaktstiften gebildet sind. Ein jeweiliger Kontaktstift ist gegen eine von einer Feder aufgebrachte Federkraft eindrückbar. In der Betriebsstellung wird somit eine definierte Andrückkraft des Gegenkontakts auf dem jeweiligen Kontakt hervorgerufen, sodass eine sichere elektrische Verbindung der Stromzuführung zum Beleuchtungsmodul gewährleistet ist. Im Weiteren werden Fertigungstoleranzen auf einfache Weise durch die verschiebbar gelagerten Kontaktstifte ausgleichbar. Die über den jeweiligen Kontaktstift aufgenommene elektrische Energie könnte z.B. mittels eines am Kontaktstift anliegenden Abnehmers abgegriffen und an die LED-Einheit weitergeleitet werden. Federnd gelagerte Kontaktstifte sind hinlänglich bekannt und werden auch als Federkontakt bezeichnet.

Ein jeweiliger Kontakt kann hierbei vorteilhafterweise als ebene Kontaktfläche ausgebildet sein. Insbesondere ist vorgesehen, dass die Stromzuführung eine sich in Längsrichtung der Tragschiene erstreckende Leiterplatte mit Leiterbahnen ist, welche die Kontakte bilden. In der Betriebsstellung liegt somit der jeweilige Gegenkontakt auf jeweils einer der Leiterbahnen auf. Die Kontakte können von bereichsweise vergrößerten Abschnitten der Leiterbahnen gebildet sein.

Vorzugsweise ist vorgesehen, dass die Kontakte der Stromzuführung insgesamt versetzt zu einer, zwischen parallel verlaufenden Seitenwänden der Tragschiene liegenden, Mittelebene angeordnet sind und/oder dass die Gegenkontakte in der Betriebsstellung insgesamt versetzt zur Mittelebene der Tragschiene angeordnet sind. Durch den Versatz der Kontakte bzw. Gegenkontakte gegenüber der Mittelebene kann ein Verpolschutz realisiert werden, d.h., dass nur in der korrekten Stellung des Beleuchtungsmoduls relativ zur Tragschiene eine Übertragung von elektrischer Energie erfolgt. Der Verpolschutz dient dem Schutz der LED-Einheit. Die Formulierung, wonach die Kontakte bzw. Gegenkontakte insgesamt versetzt zur Mittelebene angeordnet sind bedeutet, dass die Kontakte bzw. Gegenkontakte in ihrer Gesamtheit zu betrachten sind. Konkret bedeutet dies, dass bei einer Ausführung des Beleuchtungsmoduls mit zwei Gegenkontakten, diese zusammen zu betrachten sind. Dabei ist es denkbar und möglich, dass einer der Gegenkontakte in der Betriebsstellung in der Mittelebene liegt und der andere der beiden Gegenkontakte versetzt zur Mittelebene angeordnet ist.

Unter dem in dieser Schrift verwendeten Begriff Beleuchtungsmodul ist eine Einheit gemeint, die mittels der LED-Einheit künstliches Licht zur Beleuchtung von Pflanzen emittiert. Im Bereich der Pflanzenaufzucht wird im Zusammenhang mit künstlich erzeugtem Licht zur Beleuchtung von Pflanzen (=Kunstlicht) auch der Begriff Belichtung verwendet. In diesem Sinne könnte der Begriff Beleuchtung auch durch den Begriff Belichtung ersetzt werden, sodass das Beleuchtungsmodul auch als Belichtungsmodul bezeichnet werden könnte.

Weitere Vorteile und Einzelheiten der Erfindung werden anhand des in den Figuren gezeigten Ausführungsbeispiels einer erfindungsgemäßen Leuchte erläutert. Es zeigen:
- Fig. 1: eine isometrische Darstellung einer Leuchte gemäß der Erfindung;
- Fig. 2, 3: Ansichten von oben bzw. unten auf die Leuchte gemäß Fig. 1;
- Fig. 4: die Leuchte gemäß Fig. 1 in einer isometrischen Darstellung von schräg unten, wobei eines der Beleuchtungsmodule von einer Tragschiene abgenommen ist;
- Fig. 5: eine Ansicht auf eine der Stirnseiten der Leuchte des Ausführungsbeispiels;
- Fig. 6: eine zu Fig. 5 analoge Darstellung, bei der das Beleuchtungsmodul von der Tragschiene abgenommen und ein Abdeckteil der Tragschiene entfernt ist;
- Fig. 7: eines der Beleuchtungsmodule in einer isometrischen Darstellung;
- Fig. 8: eine Ansicht von oben auf das in Fig. 7 gezeigte Beleuchtungsmodul;
- Fig. 9: den Schnitt A-A der Fig. 8;
- Fig. 10: eine schematische Darstellung eines federnd gelagerten Kontaktstifts;
- Fig. 11: den Schnitt D-D der Fig. 2;
- Fig. 12: eine Ansicht von unten auf die Tragschiene der Leuchte, wobei eine Außenwand partiell ausgebrochen dargestellt ist;
- Fig. 13: das Detail B der Fig. 12, und
- Fig. 14: den Schnitt C-C der Fig. 12.

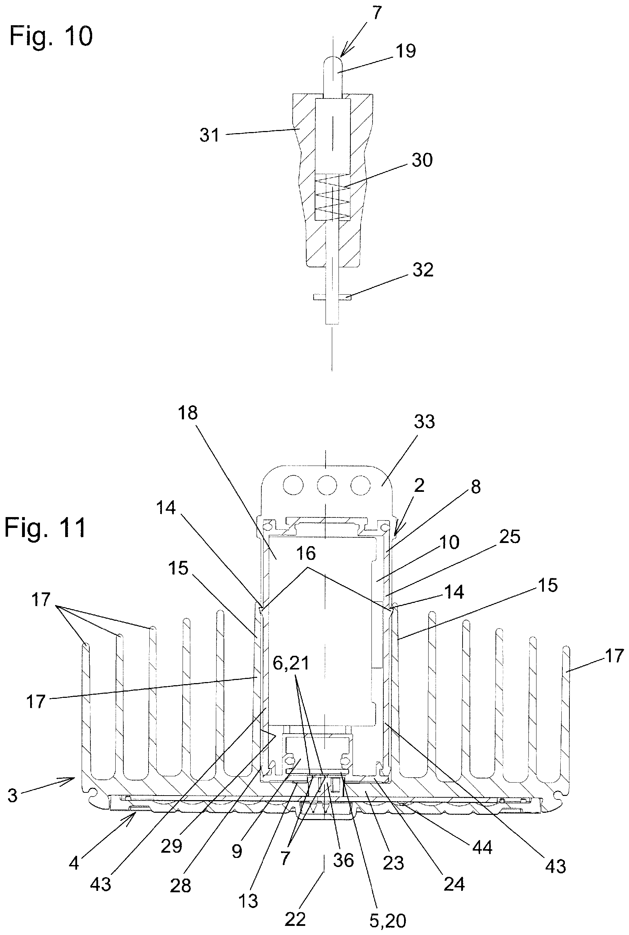

Die Leuchte 1 weist eine Vielzahl von Beleuchtungsmodulen 3 und eine Tragschiene 2 mit einem in einer Längsrichtung 35 längserstreckten Hohlprofil 8 auf. Auf einem jeweiligen Beleuchtungsmodul 3 ist eine LED-Einheit 4 mit einer Vielzahl von LEDs 44 angeordnet. Die LEDs 44 emittieren im Betrieb Licht, das zur Beleuchtung von Pflanzen dient. Eine der LEDs 44 ist beispielhaft in Fig. 11 eingezeichnet. Eine nicht näher bezeichnete Linsenanordnung verteilt das von den LEDs 44 emittierte Licht im Raum.

Das jeweilige Beleuchtungsmodul 3 weist im Ausführungsbeispiel einen Basiskörper 34 auf, der mittels Strangpressen hergestellt ist und aus Metall, insbesondere Aluminium, besteht oder Metall, insbesondere Aluminium, aufweist. Der Basiskörper 34 des Beleuchtungsmoduls 3 weist einen Basissteg 23 auf, an dem die jeweilige LED-Einheit 4 vollflächig anliegt. Die jeweilige LED-Einheit 4 ist im Ausführungsbeispiel mittels Befestigungselementen, insbesondere Schrauben, mit dem Basiskörper 34 verschraubt.

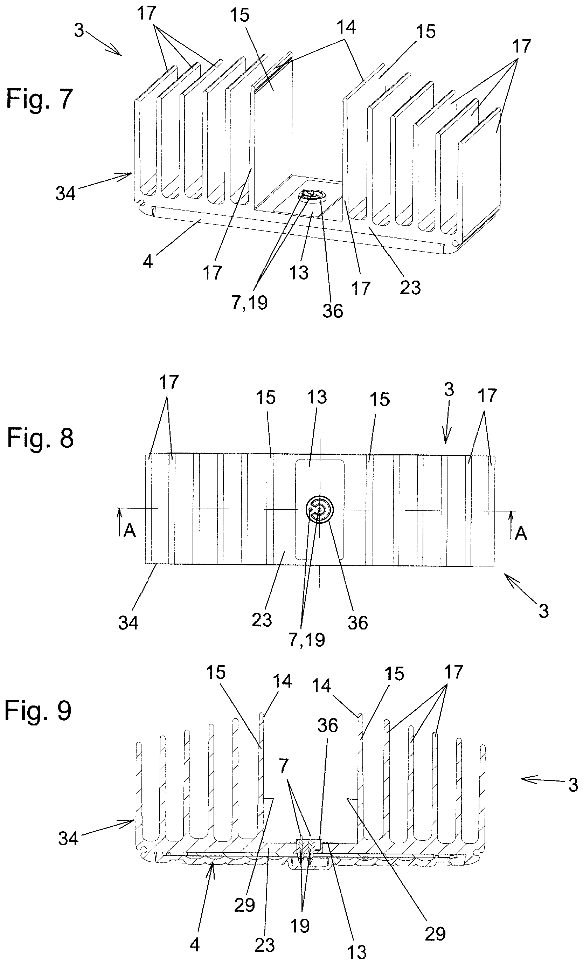

Auf der der LED-Einheit 4 gegenüberliegenden Seite sind am Basissteg 23 Kühlrippen 17 angeformt, die der Kühlung der LED-Einheit 4 im Betrieb dienen, vgl. Fig. 7. Die Kühlrippen 17 stehen im Ausführungsbeispiel in einer Richtung orthogonal zum Basissteg 23 von diesem ab, vgl. Fig. 9.

Die Beleuchtungsmodule 3 sind im Ausführungsbeispiel über Schnappverbindungen mit der Tragschiene 2 verbindbar.

Das Beleuchtungsmodul 3 weist vom Basissteg 23 abstehende Rastarme 15 auf, die in einer Betriebsstellung, in der ein jeweiliges Beleuchtungsmodul 3 mit der Tragschiene 2 verbunden ist, an die einander gegenüberliegende Seitenwände 43 des Hohlprofils 8 der Tragschiene 2 angrenzen. An einem vom Basissteg abgelegenen Ende weisen die Rastarme 15 im Ausführungsbeispiel jeweils Rastnasen 14 auf. Im Ausführungsbeispiel sind die Rastarme 15 von den in der Betriebsstellung beidseitig an die Tragschiene 2 angrenzenden Kühlrippen 17 gebildet.

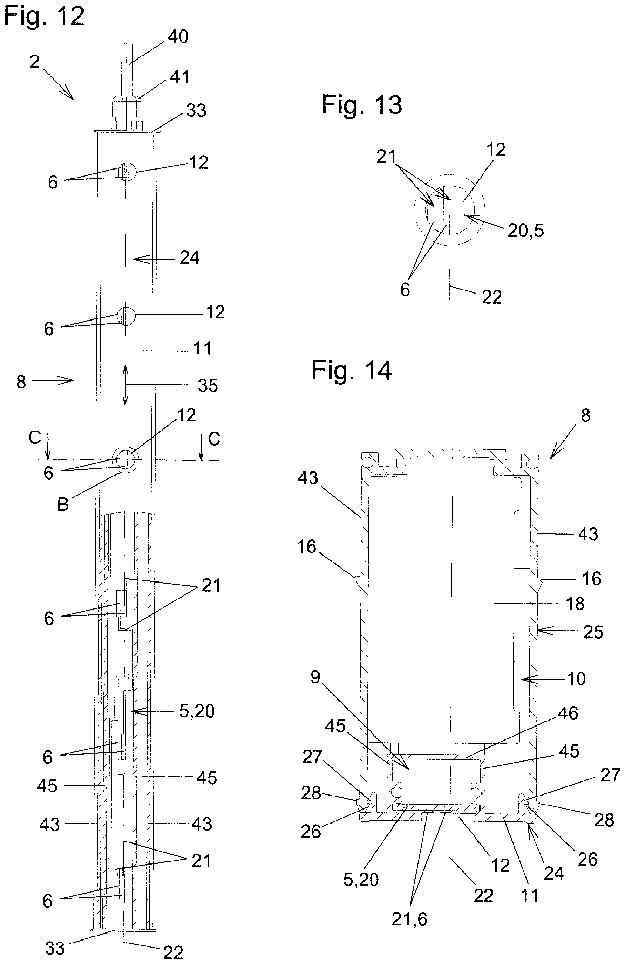

An der Tragschiene 2 sind Gegenrastelemente 16 angeordnet. Die Gegenrastelemente 16 sind im Ausführungsbeispiel an den einander gegenüberliegenden Seitenwänden 43 des Hohlprofils 8 angeformt, vgl. Fig. 14. Die Rastarme 15 des Beleuchtungsmoduls 3 sind elastisch verformbar, sodass die am jeweiligen Rastarm 15 angeordnete Rastnase 14 in der Betriebsstellung in einen vom Gegenrastelement 16 gebildeten Hinterschnitt eingreift bzw. einschnappt. In der Betriebsstellung ist ein jeweiliges Beleuchtungsmodul 3 formschlüssig mit der Tragschiene 2 verbunden. Zum Anbringen des Beleuchtungsmoduls 3 sind günstigerweise keinerlei Werkzeuge oder zusätzliche Befestigungsmittel nötig.

Die Rastarme 15 sind im Ausführungsbeispiel orthogonal zum Basissteg 23 ausgerichtet und begrenzen zusammen mit dem Basissteg 23 einen zumindest im Wesentlichen U-förmigen Zwischenraum in den die Tragschiene 2 in der Betriebsstellung eingeführt ist, vgl. Fig. 9 und 11.

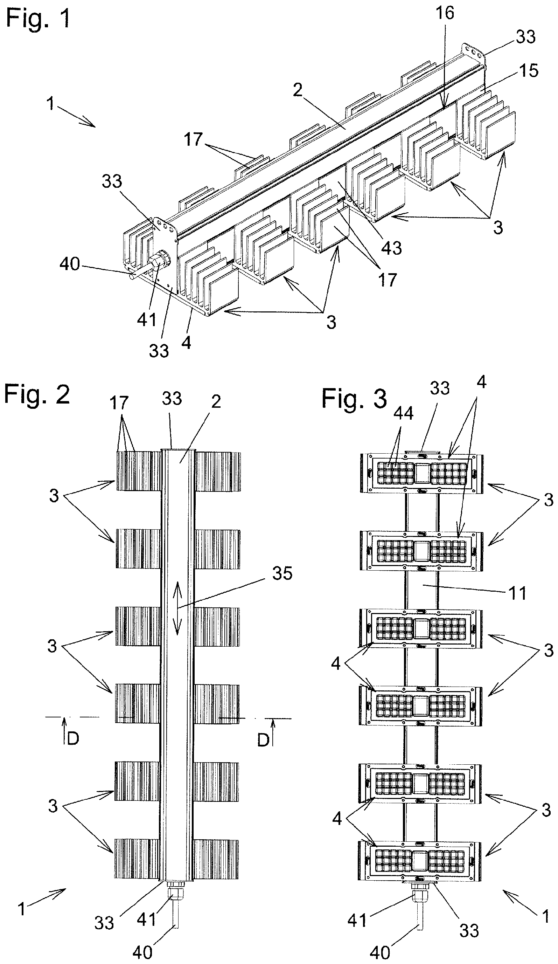

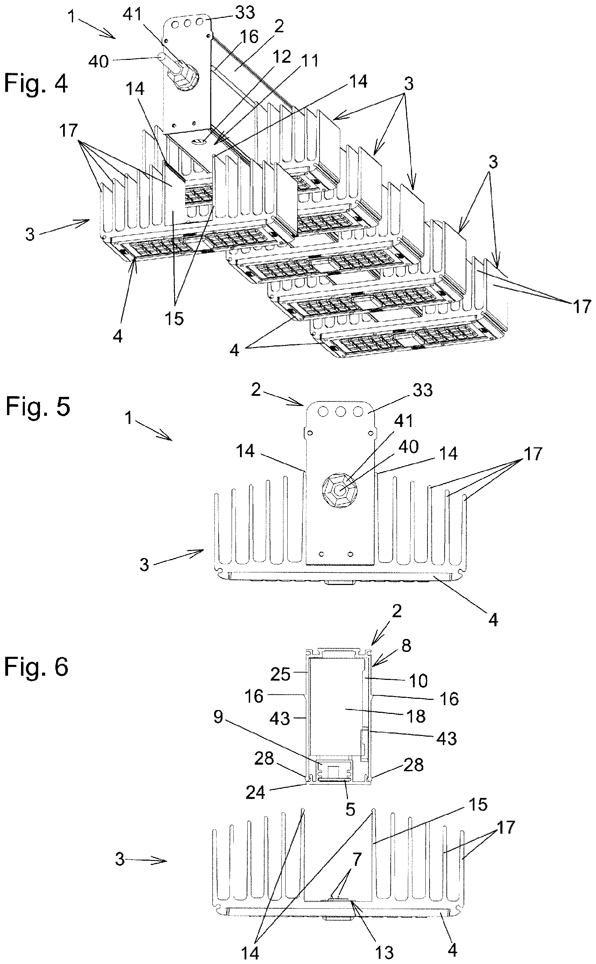

Der Begriff der Betriebsstellung bezieht sich auf ein jeweiliges Beleuchtungsmodul 3. In Fig. 1 ist daher eine Leuchte 1 dargestellt, bei der alle Beleuchtungsmodule 3 in der Betriebsstellung, d.h. mit der Tragschiene 2 verbunden, sind. In Fig. 4 ist demgegenüber eines der Beleuchtungsmodule 3 von der Tragschiene 2 abgenommen dargestellt. Die übrigen in Fig. 4 dargestellten Beleuchtungsmodule 3 befinden sich jeweils in der Betriebsstellung, d.h. im mit der Tragschiene 2 verbundenen Zustand.

Die Basisstege 23 überragen die Tragschiene 2 in der Betriebsstellung im Ausführungsbeispiel beidseitig. Bei einer Ansicht in Längsrichtung 35 der Tragschiene 2 stehen die Basisstege 23 auf einander gegenüberliegenden Seiten über die Tragschiene 2 über, vgl. Fig. 5, 11.

Im Ausführungsbeispiel ist das Hohlprofil 8 zweiteilig ausgebildet und umfasst ein Bodenteil 24 und ein im Wesentlichen U-förmiges Gehäuseteil 25, welches die schon erwähnten Seitenwände 43 mit den daran angeformten Gegenrastelementen 16 aufweist. Das Bodenteil 24 und das Gehäuseteil 25 sind mittels daran angeordneter Schnappelemente 26, 27 miteinander verbindbar bzw. verbunden. Im miteinander verbundenen Zustand, der z.B. in der Schnittansicht gemäß Fig. 14 ersichtlich ist, bilden das Bodenteil 24 und das Gehäuseteil 25 zusammen das Hohlprofil 8 aus. Im Ausführungsbeispiel sind das Bodenteil 24 und das Gehäuseteil 25 aus Aluminium oder einer Aluminiumlegierung, z. B. mittels Strangpressen, hergestellt.

Im Ausführungsbeispiel sind an den Seitenwänden 43 des Hohlprofils 8, insbesondere an den Seitenwänden 43 des Gehäuseteils 25, abstehende Abstütznasen 28 angeordnet sind, die zur Tragschiene 2 gerichtete Führungsflächen 29 der Rastarme 15 beim Verbinden des jeweiligen Beleuchtungsmoduls 3 mit der Tragschiene 2 führen. Dadurch wird ein Verkanten des Beleuchtungsmoduls 3 beim Anbringen an die Tragschiene 2 verhindert. Im Weiteren verringern die Abstütznasen 28 in der Betriebsstellung ein Spiel zwischen den Rastarmen 15 in Richtungen parallel zum Basissteg 23. Auf die optionalen Abstütznasen 28 könnte in einer anderen Ausführungsform aber auch verzichtet werden.

Im Ausführungsbeispiel ist in der Tragschiene 2 eine Stromzuführung 5 zur Versorgung der LED-Einheiten 4 mit elektrischer Energie angeordnet. Das Bodenteil 24 weist im Ausführungsbeispiel eine sich in Längsrichtung 35 der Tragschiene 2 erstreckende Hohlkammer 9 auf, in der die Stromzuführung 5 angeordnet ist. Im Ausführungsbeispiel ist vorgesehen, dass die Stromzuführung 5 eine sich in Längsrichtung der Tragschiene 2 erstreckende Leiterplatte 20 mit Leiterbahnen 21 ist, welche Kontakte 6 der Stromzuführung 5 bilden.

Die Leiterplatte 20 ist im Ausführungsbeispiel an zwei von einer Außenwand 11 des Hohlprofils 8 abstehenden Haltearmen 45 gehalten. Die Haltearme 45 weisen jeweils eine Nut auf, in die die Leiterplatte 20 in Längsrichtung 35 in die Hohlkammer 9 einschiebbar bzw. eingeschoben ist. Im Ausführungsbeispiel sind die Haltearme 45 an der von der Außenwand 11 abgelegenen Seite über einen Verbindungssteg 46 miteinander verbunden und begrenzen damit die Hohlkammer 9 in Richtungen orthogonal zur Längsrichtung 35.

Im Weiteren weist das Hohlprofil 8 eine zweite Hohlkammer 10 auf, die in einem Zustand, in dem das Bodenteil 24 und das Gehäuseteil 25 miteinander verbunden sind, vom Bodenteil 24 und vom Gehäuseteil 25 begrenzt ist. Im Hohlraum 10 ist im Ausführungsbeispiel ein Treiber 18 angeordnet, der über ein Stromkabel 40 mit elektrischer Energie versorgt ist. Der Treiber 18 ist mit der Stromzuführung 5 elektrisch leitend verbunden, was in den Figuren nicht gesondert dargestellt ist. Der Treiber 18 formt die über das Stromkabel 40 zugeführte elektrische Energie, die beispielsweise als Wechselstrom bzw. -spannung vorliegt, zum Betrieb der LED-Einheiten 4, beispielsweise in einen Gleichstrom mit entsprechender Betriebsspannung, um. Der Treiber 18 kann z.B. eine Konstantstromquelle oder eine Konstantspannungsquelle sein. Die Leitungsführung des Stromkabels 40 im Hohlprofil 8 ist aus Gründen der Übersichtlichkeit nicht in den Figuren dargestellt.

Die Tragschiene 2 weist im Ausführungsbeispiel an gegenüberliegenden Stirnseiten des Hohlprofils 8 angeordnete Abdeckungen 33 auf, die die Hohlkammern 9, 10 in Längsrichtung 35 begrenzen. Das Stromkabel 40 ist im Ausführungsbeispiel über eine an einer der Abdeckungen 33 angeordnete, abgedichtete Kabeldurchführung 41 in die Hohlkammer 10 hineingeführt, vgl. Fig. 1-3. Zwischen der jeweiligen Abdeckung 33 und dem Hohlprofil 8 ist im Ausführungsbeispiel eine nicht gesondert dargestellte Dichtung, die das Hohlprofil 8 und die jeweilige Abdeckung 33 gegenseitig abdichtet, angeordnet, wie dies auch bevorzugt ist.

An der die Hohlkammer 9 begrenzenden Außenwand 11 des Bodenteils 24 des Hohlprofils 8 sind im Ausführungsbeispiel Öffnungen 12 angeordnet, vgl. Fig. 12. Die die Öffnungen aufweisende Außenwand 11 bildet im Ausführungsbeispiel die Bodenseite des Hohlprofils 8.

Am jeweiligen Beleuchtungsmodul 3 sind jeweils zwei, mit jeweils zwei der Kontakte 6 elektrisch leitend verbindbare, Gegenkontakte 7 angeordnet. In der Betriebsstellung, d.h. wenn das jeweilige Beleuchtungsmodul 3 an der Tragschiene 2 angeordnet ist, berühren sich die Kontakte 6 und Gegenkontakte 7, wie dies z.B. in Fig. 11 dargestellt ist. Die Kontakte 6 der Stromzuführung 5 und Gegenkontakte 7 des jeweiligen Beleuchtungsmoduls 3 sind in der Betriebsstellung durch die Öffnungen 12 hindurch elektrisch leitend miteinander verbunden.

Die Leuchte 1 weist, die jeweilige Öffnung 12 umgebende, elastomere Dichtungen 13 auf, die in der Betriebsstellung zur gegenseitigen Abdichtung zwischen dem jeweiligen Beleuchtungsmodul 3 und der Tragschiene 2 angeordnet sind. Die jeweilige Dichtung 13 verhindert das Eintreten von Feuchtigkeit und anderen schädlichen Substanzen, wie z.B. Schwefel und Schwefelverbindungen, die die in der Leuchte 1 befindlichen elektrischen oder elektronischen Komponenten, insbesondere die LEDs 44 der LED-Einheiten 4 schädigen könnten. Man könnte auch davon sprechen, dass die Dichtung 13 in der Betriebsstellung zwischen der Bodenseite der Tragschiene 2 und dem Basissteg 23 angeordnet ist.

Im Ausführungsbeispiel ist vorgesehen, dass die Dichtung 13 am jeweiligen Beleuchtungsmodul 3 aufgeklebt ist. Die Außenwand 11 der Tragschiene 2 bildet somit jeweils einen Dichtsitz, an dem die Dichtung 13 in der Betriebsstellung anliegt. Die Dichtung 13 ist in den Fig. 7 bis 9 gut ersichtlich. Im Ausführungsbeispiel ist die Dichtung 13 auf dem zwischen den Rastarmen 15 liegenden Abschnitt des Basisstegs 23 aufgeklebt.

Die Dichtungen 13 bestehen im Ausführungsbeispiel aus einem Elastomer, z.B. aus aufgeschäumtem Polyurethan. Auch andere Materialien, wie z.B. Silikon oder Gummi sind denkbar und möglich. Die Dichtung 13 kann, wie im Ausführungsbeispiel, eine selbstklebende Schicht zur Befestigung am Beleuchtungsmodul 3 aufweisen. In einer anderen Ausführungsvariante könnte die jeweilige Dichtung 13 anstatt am Beleuchtungsmodul 3 an der Tragschiene 2 angeordnet sein.

Die elastomere Dichtung 13 ist in der Betriebsstellung komprimiert. D. h, die Dichtung 13 ruft somit in der Betriebsstellung eine Vorspannkraft zwischen der Tragschiene 2 und dem jeweiligen Beleuchtungsmodul 3 hervor. Dadurch kann ein unerwünschtes Spiel zwischen der Tragschiene 2 und dem jeweiligen Beleuchtungsmodul 3 in Richtungen parallel zur den Rastarmen 15 bzw. der Seitenwände 43 in der Betriebsstellung verhindert werden. Weiters wird eine zuverlässige Abdichtung der Kontakte 6 und der Gegenkontakte 7 im Betrieb der Leuchte 1 gewährleistet.

Durch das Vorsehen der Dichtungen 13 sind die Hohlkammern 9, 10 in Kombination mit der dichten Kabeldurchführung 41 und der nicht explizit eingezeichneten Dichtungen zwischen den Stirnseiten des Hohlprofils 8 und den Abdeckungen 33 vollständig von der Umgebung getrennt bzw. gegenüber der Atmosphäre abgedichtet.

Im Ausführungsbeispiel ist vorgesehen, dass die Gegenkontakte 7 von federnd gelagerten Kontaktstiften 19 gebildet sind. Die federnd gelagerten Kontaktstifte 19 ragen in der Betriebsstellung durch die Öffnung 12 in die Hohlkammer 9 des Hohlprofils 8. Die Kontaktstifte 19 ermöglichen eine sichere und zuverlässige elektrische Verbindung zwischen der Stromzuführung 5 und den LED-Einheiten 4. In Fig. 10 ist eine vereinfachte schematische Darstellung eines Gegenkontakts 7, der von einem federnd gelagerten Kontaktstift 19 gebildet ist, dargestellt. Der federnd gelagerte Kontaktstift 19 ist in einem Gehäuse 31 geführt. Im Weiteren ist eine Feder 30 vorgesehen, wobei der Kontaktstift 19 gegen eine durch die Feder 30 hervorgerufene Federkraft in das Gehäuse 31 eindrückbar ist. Im Weiteren ist ein Stromabnehmer 32 vorgesehen, der den über den Kontaktstift 19 fließenden Strom abgreift und an die LED-Einheit 4 weitergibt. Dies ist in den Figuren nicht explizit dargestellt. In Fig. 9 sind die federnd gelagerten Kontaktstifte 19 in einer Endstellung gezeigt, bei der sie ausgehend vom Basissteg 23 weiter abstehen als in der Betriebsstellung, die in Fig. 11 gezeigt ist. Durch eine Zusammenschau der Fig. 9 und 11 kann die unterschiedliche Stellung der Gegenkontakte 7 nachvollzogen werden.

Das jeweilige Beleuchtungsmodul 3 weist einen Sockel 36 auf, an dem die, im Ausführungsbeispiel als federnd gelagerte Kontaktstifte 19 ausgebildeten, Gegenkontakte 7 angeordnet sind. D.h., im Ausführungsbeispiel weist der Sockel 36 das Gehäuse 31 zur Führung des Kontaktstiftes 19 auf. Der Sockel 36 ist an der dem Basissteg 23 zugewandten Seite der LED-Einheit 4 an der LED-Einheit 4 befestigt und durchdringt den Basissteg 23 des Basiskörpers 34 vollständig. Der Sockel 36 steht im Ausführungsbeispiel auf der, der LED-Einheit 4 gegenüberliegenden, Seite vom Basissteg 23 ab. In der Betriebsstellung erstreckt sich der Sockel 36 in die Öffnung 12 hinein um eine korrekte Positionierung des jeweiligen Beleuchtungsmoduls 3, bezogen auf die Längsrichtung 35 der Tragschiene 2, zu gewährleisten, vgl. Fig. 11

In Fig. 12 ist die Tragschiene 2 so dargestellt, dass ein Teil der, die Bodenseite des Hohlprofils 8 bildenden, Außenwand 11, welche die Öffnungen 12 aufweist, ausgebrochen ist. Im unteren Teil der Fig. 12 ist gezeigt, dass die Kontaktstellen 6 von den Leiterbahnen 21 der Leiterplatte 20 gebildet sind. Außerdem ist aus dieser Figur gut ersichtlich, dass die Beleuchtungsmodule 3 in Serie geschaltet sind. Dies ist natürlich nur eine mögliche Ausführungsform. Es wäre auch denkbar und möglich, die Beleuchtungsmodule 3 parallel zu verschalten.

Im Weiteren ist in den Fig. 12 - 14 gezeigt, dass die Kontakte 6 der Stromzuführung 5 im Ausführungsbeispiel insgesamt versetzt zu einer, zwischen den parallel verlaufenden Seitenwänden 43 der Tragschiene 2 liegenden, Mittelebene 22 angeordnet sind. Die Formulierung, wonach die Kontakte insgesamt versetzt zur Mittelebene 22 angeordnet sind, bedeutet, dass die Kontakte 6 in ihrer Gesamtheit zu betrachten sind. Im Weiteren ist vorgesehen, dass die Gegenkontakte 7 in der Betriebsstellung insgesamt versetzt zur Mittelebene 22 der Tragschiene 2 angeordnet sind. Diese Anordnung ist in Fig. 11 dargestellt. Durch die versetzte Anordnung der Kontakte 6 insgesamt und der Gegenkontakte 7 insgesamt gegenüber der Mittelebene 22 kann ein Verpolschutz realisiert werden. D.h., dass die Beleuchtungsmodule 3 nur in der korrekten Stellung über die Gegenkontakte 7 mit Strom versorgt werden, nämlich dann, wenn diese in der Betriebsstellung an den Kontakten 6 der Stromzuführung 5 anliegen. Durch den Verpolschutz kann eine unbeabsichtigte falsche Bestromung der LED-Einheiten 4 verhindert werden.

Ein Verpolschutz könnte prinzipiell auch durch andere Maßnahmen erreicht werden. Z.B. könnte die jeweilige Öffnung 12 versetzt zur Mittelebene 22 angeordnet sein. Auch könnte die Form der Öffnung 12 unsymmetrisch bezüglich der Mittelebene 22 ausgebildet sein, um eine falsche Bestromung der LED-Einheiten 4 zu verhindern.

Wie erläutert, ist die elektrische Verbindung zwischen dem Treiber 18 und der Stromzuführung 5 in den Figuren nicht gesondert gezeigt. Zur elektrischen Verbindung des Treibers 18 mit der Stromzuführung 5 mittels zumindest eines Verbindungskabels ist im Verbindungssteg 46 eine nicht dargestellte Bohrung vorgesehen, durch die hindurch das zumindest eine Verbindungskabel verläuft. In diesem Zusammenhang könnte am Verbindungssteg 46 eine abgedichtete Kabeldurchführung für das Verbindungskabel analog zur Kabeldurchführung 41 vorgesehen sein, die die Hohlkammern 9, 10 und das Verbindungskabel gegeneinander abdichtet.

Im Ausführungsbeispiel ist der Treiber 18 im Hohlprofil 8 angeordnet. In einer anderen Ausführungsvariante wäre es auch denkbar, dass der Treiber außerhalb der Leuchte 1 angeordnet ist und die Versorgung der Stromzuführung 5 mit elektrischer Energie, z.B. als Gleichstrom bzw. Gleichspannung, über das Stromkabel 40 erfolgt.

Im Ausführungsbeispiel ist vorgesehen, dass das Hohlprofil 8 zweiteilig ausgebildet ist. Es wäre auch denkbar und möglich, dass das Hohlprofil 8 in einer anderen Ausführungsvariante einteilig ausgebildet ist, wobei dann auf die im Ausführungsbeispiel gezeigten Schnappelemente 26, 27 verzichtet werden kann.

Das Hohlprofil 8 weist im Ausführungsbeispiel zwei Hohlkammern 9, 10 auf. Es wäre auch denkbar und möglich, dass das Hohlprofil 8 nur eine einzige Hohlkammer aufweist. Z.B. könnte auf einen Verbindungssteg 46, der die Haltearme 45 miteinander verbindet, in einer modifizierten Ausführungsform einer erfindungsgemäßen Leuchte 1 verzichtet werden. Auch dann ist die Stromzuführung günstigerweise in der einzigen Hohlkammer des Hohlprofils angeordnet. Auch ein Hohlprofil 8 mit nur einer Hohlkammer könnte einteilig ausgebildet sein.

Im gezeigten Ausführungsbeispiel weist das Hohlprofil 8 zwei offene Stirnseiten auf, die mit Abdeckungen 33 verschlossenen sind. In einer anderen Ausführungsvariante könnte eine der Stirnseiten einstückig mit dem Hohlprofil 8 ausgebildet sein. D. h., die Leuchte weist dann nur eine offene Stirnseite auf, die mit einer abnehmbaren Abdeckung verschließbar ist.

**Legende zu den Hinweisziffern:**

| | | | |
|---|---|---|---|
| 1 | Leuchte | 29 | Führungsfläche |
| 2 | Tragschiene | 30 | Feder |
| 3 | Beleuchtungsmodul | 31 | Führung |
| 4 | LED-Einheit | 32 | Stromabnehmer |
| 5 | Stromzuführung | 33 | Abdeckung |
| 6 | Kontakt | 34 | Basiskörper |
| 7 | Gegenkontakt | 35 | Längsrichtung |
| 8 | Hohlprofil | 36 | Sockel |
| 9 | Hohlkammer | 40 | Stromkabel |
| 10 | Hohlkammer | 41 | Kabeldurchführung |
| 11 | Außenwand | 42 | Führungsstück |
| 12 | Öffnung | 43 | Seitenwand |
| 13 | Dichtung | 44 | LED |
| 14 | Rastnase | 45 | Haltearm |
| 15 | Rastarm | 46 | Verbindungssteg |
| 16 | Gegenrastelement | | |
| 17 | Kühlrippe | | |
| 18 | Treiber | | |
| 19 | Kontaktstift | | |
| 20 | Leiterplatte | | |
| 21 | Leiterbahn | | |
| 22 | Mittelebene | | |
| 23 | Basissteg | | |
| 24 | Bodenteil | | |
| 25 | Gehäuseteil | | |
| 26 | Schnappelement | | |
| 27 | Schnappelement | | |
| 28 | Abstütznase | | |

## Patentansprüche

1. Leuchte (1) zur Beleuchtung von Pflanzen, wobei die Leuchte (1) eine Tragschiene (2) mit einer in oder an der Tragschiene (2) angeordneten Stromzuführung (5) und an der Tragschiene (2) angeordnete LED-Einheiten (4) aufweist, welche von der Stromzuführung (5) mit elektrischer Energie gespeist sind, wobei die Leuchte (1) mit der Tragschiene (2) verbindbare und wieder zerstörungsfrei von der Tragschiene (2) lösbare Beleuchtungsmodule (3) aufweist, auf denen jeweils zumindest eine der LED-Einheiten (4) angeordnet ist, und die Stromzuführung (5) Kontakte (6) aufweist und am jeweiligen Beleuchtungsmodul (3), mit den Kontakten (6) elektrisch leitend verbindbare, Gegenkontakte (7) angeordnet sind, wobei sich die Kontakte (6) und Gegenkontakte (7) in einer Betriebsstellung, in der ein jeweiliges Beleuchtungsmodul (3) mit der Tragschiene (2) verbunden ist, berühren, und die Tragschiene (2) ein Hohlprofil (8) mit zumindest einer sich in Längsrichtung des Hohlprofils (8) erstreckenden Hohlkammer (9) umfasst, in der die Stromzuführung (5) angeordnet ist, **dadurch gekennzeichnet, dass** eine die Hohlkammer (9) begrenzende Außenwand (11) des Hohlprofils (8) Öffnungen (12) aufweist, durch die hindurch die Gegenkontakte (7) des jeweiligen Beleuchtungsmoduls (3) mit den Kontakten (6) elektrisch leitend verbindbar sind, und die Leuchte (1), die jeweilige Öffnung (12) umgebende, elastomere Dichtungen (13) aufweist, die in der Betriebsstellung zur gegenseitigen Abdichtung zwischen dem jeweiligen Beleuchtungsmodul (3) und der Tragschiene (2) angeordnet sind.

2. Leuchte (1) nach Anspruch 1, **dadurch gekennzeichnet, dass** die Beleuchtungsmodule (3) über Schnappverbindungen mit der Tragschiene (2) verbunden sind.

3. Leuchte (1) nach Anspruch 1 oder 2, **dadurch gekennzeichnet, dass** die die Öffnungen (12) aufweisende Außenwand (11) die Bodenseite des Hohlprofils (8) bildet und die Beleuchtungsmodule (3) Basisstege (23) aufweisen, wobei die Dichtung (13) in der Betriebsstellung zwischen der die Öffnungen (12) aufweisenden Außenwand (11) und dem jeweiligen Basissteg (23) angeordnet ist.

4. Leuchte (1) nach Anspruch 3, **dadurch gekennzeichnet, dass** die Basisstege (23) die Tragschiene (2) in der Betriebsstellung, in einer Richtung parallel zur Längsrichtung (35) der Tragschiene (2) gesehen, insbesondere beidseitig, überragen.

5. Leuchte (1) nach Anspruch 2 und einem der Ansprüche 3 oder 4, **dadurch gekennzeichnet, dass** ein jeweiliges Beleuchtungsmodul (3) vom Basissteg (23) abstehende Rastarme (15) aufweist, die in der Betriebsstellung beidseitig an die Tragschiene (2) angrenzen und in an der Tragschiene (2) angeordnete Gegenrastelemente (16) einschnappen.

6. Leuchte (1) nach Anspruch 5, **dadurch gekennzeichnet, dass** ein jeweiliges Beleuchtungsmodul (3) vom Basissteg (23) abstehende Kühlrippen (17) aufweist, und dass die Rastarme (15) von den in der Betriebsstellung beidseitig an die Tragschiene (2) angrenzenden Kühlrippen (17) gebildet sind.

7. Leuchte (1) nach einem der Ansprüche 1 bis 6, **dadurch gekennzeichnet, dass** in der oder einer der Hohlkammer(n) (10) der Tragschiene (2) ein mit der Stromzuführung (5) elektrisch leitend verbundener Treiber (18) zur Versorgung der LED-Einheit (4) mit elektrischer Energie angeordnet ist.

8. Leuchte (1) nach einem der Ansprüche 1 bis 7, **dadurch gekennzeichnet, dass** die Gegenkontakte (7) von federnd gelagerten Kontaktstiften (19) gebildet sind.

9. Leuchte (1) nach einem der Ansprüche 1 bis 8, **dadurch gekennzeichnet, dass** die Stromzuführung (5) eine sich in Längsrichtung der Tragschiene (2) erstreckende Leiterplatte (20) mit Leiterbahnen (21) ist, welche die Kontakte (6) bilden.

10. Leuchte (1) nach einem der Ansprüche 1 bis 9, **dadurch gekennzeichnet, dass** die Kontakte (6) der Stromzuführung (5) insgesamt versetzt zu einer, zwischen parallel verlaufenden Seitenwänden (43) der Tragschiene (2) liegenden, Mittelebene (22) angeordnet sind und/oder dass die Gegenkontakte (7) in der Betriebsstellung insgesamt versetzt zur Mittelebene (22) der Tragschiene (2) angeordnet sind.

## Claims

1. A light (1) for the illumination of plants, wherein the light (1) has a bearing rail (2), with a current supply means (5) arranged in or on the bearing rail (2), and LED units (4), arranged on the bearing rail (2) and fed electrical energy by the current supply means (5), wherein the light (1) has illumination modules (3), connectable to the bearing rail (2) and detachable from the bearing rail (2) again in a non-destructive manner, on which in each case at least one of the LED units (4) is arranged, and the current supply means (5) has contacts (6) and counter contacts (7), connectable to the contacts (6) in an electrically conductive manner, are arranged on the respective illumination module (3), wherein the contacts (6) and counter contacts (7) contact in an operating position in which a respective illumination module (3) is connected to the bearing rail (2), and the bearing rail (2) comprises a hollow profile (8) with at least one hollow chamber (9), extending in the longitudinal direction of the hollow profile (8), in which the current supply means (5) is arranged, **characterised in that** an outer wall (11), bounding the hollow chamber (9), of the hollow profile (8) has openings (12) through which the counter contacts (7) of the respective illumination module (3) are connectable to the contacts (6) in an electrically conductive manner, and the light (1) has elastomeric seals (13), surrounding the respective opening (12), which in the operating position are arranged between the respective illumination module (3) and the bearing rail (2) for mutual sealing.

2. A light (1) according to claim 1, **characterised in that** the illumination modules (3) are connected to the bearing rail (2) via snap-fit connections.

3. A light (1) according to claim 1 or 2, **characterised in that** the outer wall (11) having the openings (12) forms the bottom side of the hollow profile (8) and the illumination modules (3) have base webs (23), wherein the seal (13) is arranged between the outer wall (11), having the openings (12), and the respective base web (23) in the operating position.

4. A light (1) according to claim 3, **characterised in that** in the operating position, the base webs (23) project beyond the bearing rail (2), in particular at both sides, when viewed in a direction parallel to the longitudinal direction (35) of the bearing rail (2).

5. A light (1) according to claim 2 and one of claims 3 and 4, **characterised in that** a respective illumination module (3) has locking arms (15), protruding from the base web (23), which in the operating position abut against the bearing rail (2) at both sides and snap into counter locking elements (16) arranged on the bearing rail (2).

6. A light (1) according to claim 5, **characterised in that** a respective illumination module (3) has cooling ribs (17) protruding from the base web (23), and **in that** the locking arms (15) are formed by the cooling ribs (17) abutting against the bearing rail (2) at both sides in the operating positon.

7. A light (1) according to any one of claims 1 to 6, **characterised in that** in the hollow chamber (10) or one of the hollow chambers (10) of the bearing rail (2) there is arranged a driver (18), connected to the current supply means (5) in an electrically conductive manner, to supply the LED unit (4) with electrical energy.

8. A light (1) according to any one of claims 1 to 7, **characterised in that** the counter contacts (7) are formed by spring-mounted contact pins (19).

9. A light (1) according to any one of claims 1 to 8, **characterised in that** the current supply means (5) is a printed circuit board (20), extending in the longitudinal direction of the bearing rail (2), with strip conductors (21) which form the contacts (6).

10. A light (1) according to any one of claims 1 to 9, **characterised in that** the contacts (6) of the current supply means (5) are as a whole arranged offset in relation to a centre plane (22) lying between parallel-running lateral walls (43) of the bearing rail (2), and/or **in that** the counter contacts (7) are as a whole arranged offset in relation to the centre plane (22) of the bearing rail (2) in the operating position.

## Revendications

1. Luminaire (1) pour l'éclairage de plantes, le luminaire (1) présentant un rail porteur (2) avec une alimentation électrique (5) disposée dans ou sur le rail porteur (2) et des unités de LED (4) disposées sur le rail porteur (2) et qui sont alimentées en énergie électrique par l'alimentation électrique (5), le luminaire (1) étant muni de modules d'éclairage (3) qui peuvent être reliés au rail porteur (2) et qui peuvent être redétachés du rail porteur (2) de manière non destructive, et sur chacun desquels est disposé au moins l'une des unités de LED (4), et l'alimentation électrique (5) étant munie des contacts (6), et des contacts complémentaires (7) étant disposés sur chacun des modules d'éclairage (3) et pouvant être reliés aux contacts (6) de manière électriquement conductrice, les contacts (6) et les contacts complémentaires (7) se touchant dans une position de fonctionnement dans laquelle un module d'éclairage (3) est relié au rail porteur (2), et le rail porteur (2) comprenant un profilé creux (8) avec au moins une cavité (9) s'étendant dans la direction longitudinale du profilé creux (8) et dans laquelle est disposée l'alimentation électrique (5), **caractérisé en ce qu'**une paroi extérieure (11) du profilé creux (8) délimitant la cavité (9) est munie d'ouvertures (12) à travers lesquelles les contacts complémentaires (7) de chaque module d'éclairage (3) peuvent être reliés de manière électriquement conductrice aux contacts (6), et le luminaire (1) est muni de joints en élastomère (13) entourant chaque ouverture (12), lesquels joints, en position de fonctionnement, sont disposés pour assurer l'étanchéité mutuelle entre chaque module d'éclairage (3) et le rail porteur (2).

2. Luminaire (1) selon la revendication 1, **caractérisé en ce que** les modules d'éclairage (3) sont reliés au rail porteur (2) au moyen de connexions à encliquetage.

3. Luminaire (1) selon la revendication 1 ou 2, **caractérisé en ce que** la paroi extérieure (11) munie des ouvertures (12) forme le côté inférieur du profilé creux (8), et les modules d'éclairage (3) son munis de traverses de base (23), le joint (13), en position de fonctionnement, étant disposé entre la paroi extérieure (11) munie des ouvertures (12) et la traverse de base (23) correspondante.

4. Luminaire (1) selon la revendication 3, **caractérisé en ce qu'**en position de fonctionnement, les traverses de base (23), considérées dans une direction parallèle à la direction longitudinale (35) du rail porteur (2), dépassent du rail porteur (2), en particulier dépassent des deux côtés.

5. Luminaire (1) selon la revendication 2 et l'une des revendications 3 ou 4, **caractérisé en ce que** chaque module d'éclairage (3) est muni de bras d'encliquetage (15) saillant de la traverse de base (23), lesquels, en position de fonctionnement, sont adjacents des deux côtés au rail porteur (2) et s'encliquettent sur des éléments d'encliquetage complémentaires (16) disposés sur le rail porteur (2).

6. Luminaire (1) selon la revendication 5, **caractérisé en ce que** chaque module d'éclairage (3) est muni d'ailettes de refroidissement (17) saillant de la traverse de base (23), et **en ce que** les bras d'encliquetage (15) sont formés par les ailettes de refroidissement (17) qui, en position de fonctionnement, sont adjacentes des deux côtés au rail porteur (2).

7. Luminaire (1) selon l'une des revendications 1 à 6, **caractérisé en ce qu'**un excitateur (18), qui est relié de manière électriquement conductrice à l'alimentation en courant (5), est disposé dans la ou l'une des cavités (10) du rail porteur (2) pour alimenter l'unité de LED (4) en énergie électrique.

8. Luminaire (1) selon l'une des revendications 1 à 7, **caractérisé en ce que** les contacts complémentaires (7) sont formés par des broches de contact (19) montées de manière élastique.

9. Luminaire (1) selon l'une des revendications 1 à 8, **caractérisée en ce que** l'alimentation électrique (5) est une carte de circuit imprimé (20) s'étendant dans la direction longitudinale du rail porteur (2) avec des pistes conductrices (21) qui forment les contacts (6).

10. Luminaire (1) selon l'une des revendications 1 à 9, **caractérisé en ce que** tous les contacts (6) de l'alimentation électrique (5) sont disposés de manière décalée par rapport à un plan médian (22) situé entre des parois latérales (43) parallèles du rail porteur (2), et/ou **en ce que** tous les contacts complémentaires (7), en position de fonctionnement, sont disposés de manière décalée par rapport au plan médian (22) du rail porteur (2).
